# EUROPEAN PATENT APPLICATION

(11) **EP 1 991 011 A2**
(43) Date of publication of application: **12.11.2008**
(21) Application number: 07022701.2
(22) Date of filing: 22.11.2007
(51) Int. Cl.: H04Q 7/22

(54) **A method for carrier sense in a communications system and corresponding receiving and sending nodes of the communications system**

(30) Priority: 08.05.2007 EP 07009215
(71) Applicant: SIEMENS AKTIENGESELLSCHAFT, 80333 München (DE)
(72) Inventor: Sowade, Steffen, 15566 Schöneiche (DE)

(57) **Abstract**

The present invention refers to a method for carrier sense in a communications system and to corresponding receiving and sending nodes of the communications system. The methodology according to the present invention comprises transmitting data several times from a transmitting node to a receiving node and indicating for the transmitting, how often (count down) the data will be transmitted again. This count down mechanism is used for estimating the real channel condition of a sector of a receiving node.

## Description

The present invention refers to a method for carrier sense in a communications system and to corresponding receiving and sending nodes of the communications system.

### BACKGROUND OF THE INVENTION

In a communications network a plurality of channels is used to enable communication between several nodes of a network. Nodes of a network are, for example, stations which are configured to send/transmit and/or to receive information. The information communicated between the network nodes may be, for example, control information or signals and/or data or data packets. In the following, the terms sending and transmitting will be used as synonyms. For the time of reception of data (signal, energy and/or packet), a corresponding network node receiving the data is blocked. However, it may happen that two packets or signals arrive at the same time at a network node over the same channel. In such a case, a collision caused by the two packets or signals occurs in said channel. As the number of channels used for communication between network nodes is limited, a probability of a collision in a channel is very high.

To avoid such collisions and to ensure a secure operating of a communications network, it is important to have knowledge about current condition(s) of channel(s) used for communication. However, it is not always possible. Frequently, it is not possible to determine whether a channel is free and, if not, how long the channel will be blocked for a current communication. Therefore, false assumptions with regard to the state of the channel are made leading to wrong decisions whether it is possible to send or not. Consequently, in the worst case a packet or a signal is sent in a channel, which is already in use or reserved for another (current) communcation. Sending in a reserved channel, however, may cause a collision situation - a loss of the current and of the new transmission of data.

The data communicated between the network nodes represents, for example, control data, energy, signals and/or data packets.

Known methods for estimating a channel condition, e.g. a channel is used or unused, show the problem, that under certain circumstances it is not possible to estimate whether the channel is really not used of how long the channel will be used. Due to a wrong estimation of the channel condition a wrong decision will be made whether and when it is possible to send data. In such case it can happen that data is sent into an already used channel and data of the used channel and data, which is currently sent, will be destroyed.

Known solutions for estimation of an assignment status of a channel only use a detection of received energy of the respective channel. Is energy of the respective channel detected via the antenna the channel is defined as used, e.g. see the standards of the WLAN (WLAN, wireless local area network) family IEEE 802.11.

### SUMMARY OF THE INVENTION

It is an object of the present invention to provide an improved estimation of an assignment status of a channel.

This object or problem is achieved by a method according to claim 1, a transmitting node of a communications network according to claim 8 and receiving node according to claim 10.

The general idea of the presented solution comprises the following items, which will be explained bellow in more detail:
- Use of directed antennas,
- Multiple transmission of a packet with information, which indicates how often the packet will still be sent (count down),
- Storage antenna-wise which station can be received by the respective antenna and which is the status of the actual sector (of the respective antenna) such as used by station ID or unused.
   The receiver contains several antennas, which are arranged in circular arrangement and the respective antenna is capable of receiving energy / signals from outside circle in a specific angular field. To perform this, the receiver activates only one antenna to receive energy / signals over a particular time period. After finish of this particular time period, the receiver switches to the next antenna, and so on. The receiver receives one after another from different directions. The reception of a signal of an antenna is in general not exactly limited to the ideal sector border of the antenna. Hence, it is possible that the previous or the succeeding antenna, depending on the position of the transmitting station in relation to the receiving station, the same signal can be received, may be the different or lower energy. It goes without saying that the arrangement of the antennas does not have to be only in circular arrangements, e. g. the antennas can also be arranged spherically for receiving signals / energy from a 3D room, e. g. spherically room.
   The sender transmits its signal not only once but several times to the receiver, which contains several antennas as described above. For each transmission it will be indicated, how often the signal will be sent over again (count down). The maximal number of the transmission of the signal depends on the number of antennas / sectors of receivers / or transmitters and depends on whether the nodes are synchronised or not.

### First example:

There are eight sectors, each covers an area of 45°, the stations are synchronised. The signal will be transmitted eight times. The time period to monitor a sector is the one transmission period of a single signal.

### Second example:

There are eight sectors, each covers an area of 45°, the stations are not synchronised. The signal will be sent sixteen times. The time period to monitor a sector is twice of the time period to transmit a single signal.

If it is known for an earlier observation of a channel, that data of a particular channel A is receivable on both, section 0 and section 1, and the channel for sector 1 is actually known as unused or as having collisions with an unknown transmission period, it is possible to look up a status field of sector 0, whether the detected signal of sector 0 comes from a station, which is receivable by the actual section and which indicated by its count down field to send still several times. If this is the case, it can be concluded that the station, which was found in the status field of the previous sector, takes part in the collision of the actual sector. In a next step, according to the conclusion of the previous sector, the status information of the previous sector, address and the time period of the announced transmission will be given to the actual sector. The actual sector is set as used for the acquired period of time. A transmission will not be started from this sector.

In an analogue way it is possible to conclude from the succeeding sector on the status of the actual sector. It is a precondition that the status of the succeeding sector remembers a transmission of the other station, which can also be received on the actual sector and which indicated by its count down to transmit the packet still at least so often, such that its packets can also be received by the previous sector.

It is an advantage of the presented method to reduce a number of wrong decisions for sending data although the channel to be used for transmission is already in use, because the real actual state of the actual channel can be estimated by taking the channel conditions of the neighbour sectors into account. The count down mechanism is not only used for synchronization purpose, more over it is used for estimating the real channel condition of a sector. The repeatedly transmission of signals/data packets is avoided, such that already active transmissions are not disturbed by new channel access, if it is understood, that the channel is already used.

### BRIEF DESCRIPTION OF THE DRAWINGS

The present invention will be more clearly understood from the following description of the embodiments of the invention read in conjunction with the attached drawings, in which:
Fig. 1 presents a scenario of an Extended Exposed Terminal Effect;
Fig. 2 presents a RTS/CTS Countdown according to one embodiment of the present invention, where part 1) shows guard time before answering to avoid CTS crashing with own RTS, part 2) shows longer guard time before answering only prolong transmission cycle, and part 3) shows how announcing transmission countdown avoids guard times and speeds up the RTS/CTS procedure;
Fig. 3 shows Overblocking due Blocking Policy;
Fig. 4 illustrates sendingPolicy; and
Fig. 5 presents a table representing blockingPolicy and sendingPolicy Interdependencies for Static Case; the Redder the Cell, the More Critical the Policy-Mix is for Permission to Send;

### DESCRIPTION OF THE PREFERRED EMBODIMENTS

Although applicable on several handshaking methodologies (automated processes of negotiation that dynamically sets parameters of a communications channel established between two network nodes before normal communication over the channel begins), in following, the present invention will be explained in more detail by an example of the RTS/CTS (Request To Send/Clear To Send) mechanism.

Further, it has to be pointed out, that, although the present invention is described rather by use of method steps, the involved nodes (receiving nodes and transmitted nodes) comprise the necessary arrangements, configurations and/or means to perform the corresponding steps, not described in detail for sake of conciseness. In particular, the presence of corresponding arrangements, configurations and/or means is provided also by the fact, that the corresponding nodes are able to perform the corresponding steps sketched in general above and described in more detail bellow.

As regards the RTS/CTS mechanism, it is well known as collision avoidance (CA) mechanism to prevent the hidden terminal effect. For sectored nodes with knowledge of or the ability to gather and store topology information also the exposed terminal effect can be solved.

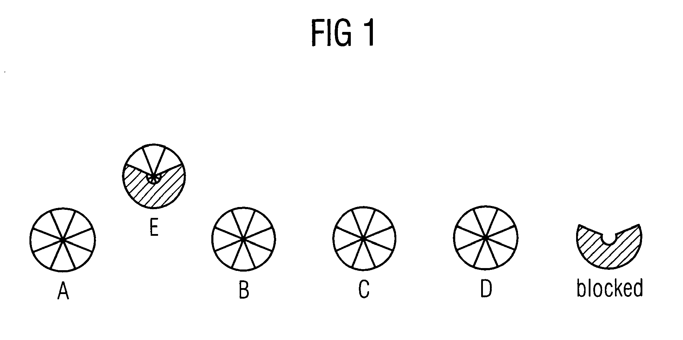

Fig. 1 shows a typical scenario to illustrate the mechanism on sectored nodes. Each node can transmit to its closest neighbour and topology knowledge about the neighbours is available in the nodes. Node B knows which sector will be under foreign access by a node C when B receives a Control Channel (CC) packet sent by C. Hence, when B receives a packet from A, deployed in the opposite direction, B can answer the packet without disturbing node C.

Assume C sends RTS to D and receives CTS from D. Thus C will start data transmission to D. B received the RTS from C. It looks up the topology information table (TIT) and finds out that the address in C's RTS, is not in transmission range of B, so the addressed node D must be a two hop node to B. Now, while transmission between C and D takes place, B cannot disturb C because C transmits to the opposite direction and will not listen to B. Maybe B could disturb D that is not in communication range but might be in interference range. Thus B is forbidden to send a packet in this direction. But, as B has topology knowledge, it is allowed to send to A. So B sends an RTS to A and receives the corresponding CTS. Now the data exchange start from B to A.

One problem is that C, while talking to D, did not receive the RTS from B. So if C would like to transmit to E later, it innocently sends an RTS to E. In case E noticed the RTS/CTS from A/B, its sectors are blocked as shown. E will not reply with CTS. However, if E did not store the network allocation vector (NAV) in time of the announced transmission, but only for the case a collision has bee noticed, it will reply with CTS. C and E start data transfer that may be disturbed by the A/B transfer.

In contrast to the common RTS/CTS mechanism, the packets will be sent 2*N-times, in case of unsnchronized nodes, with N the number of sectors in a node. For this reason the mechanism will need much more time than in omni-directional case. When e. g. RTS and CTS are assumed to have a length of Z = 30 bytes each including all overhead, the data rate R = 100 kbit/s and a node consist of N = 8 sectors, the RTS/CTS hand-shakes requires transmission of 2*(2*N*Z) = 960 bytes = 7.68 kbit which is equivalent to transmission time of 76.8 ms. A further delay will take place, if the sector switching time H and the Rx/Tx and Tx/Rx switching time respectively is not zero. CC will be occupied for almost 80 ms for RTS/CTS handshake only. Fortunately, even if there are multiple RTS/CTS in the air the receiving nodes only monitor a single direction at once. Thus the collision probability is reduced by the number of sectors. However, energy consumption for RTS/CTS mechanism in sectored nodes with each sector owning a separate transmission unit is higher than when a single antenna is used for omni-directional transmission.

If the best sector to the corresponding node is pre-known in TIT, a node, waiting for the expected CTS, monitors already the best sector it wants to send data (DAT) through. Thus the node has 2*N changes to receive one of the 2*N CTS sent. Upon receipt it will wait for the end of the last CTS before sending data. Even if sending the CTS once for its corresponding node would be enough, it must be sent 2*N times to ensure third party nodes can receive it while listening the CC sector by sector.

The RTS/CTS countdown function is a function for sectored nodes that has two effects: It can speed up a nodes answer by providing information about synchronisation of nodes and it can be used to make better decisions for the sector state.

When an RTS or CTS is sent omni-directional in CC, it is sent 2*N-times in a row. N is the number of sectors. It must be sent that often to ensure that the receiver has the change to receive it once while listening once for each sector (full cycle CCRx). This is because the receiving node monitors only a single direction at a time. It listens to a specific sector for two times the length of RTS or CTS packet including all overhead. Then it switches to the next sector. So a sectored node works in a slotted manner. However, there is no guarantee for successful reception at all, because the sending node starts to transmit at any given point in time.

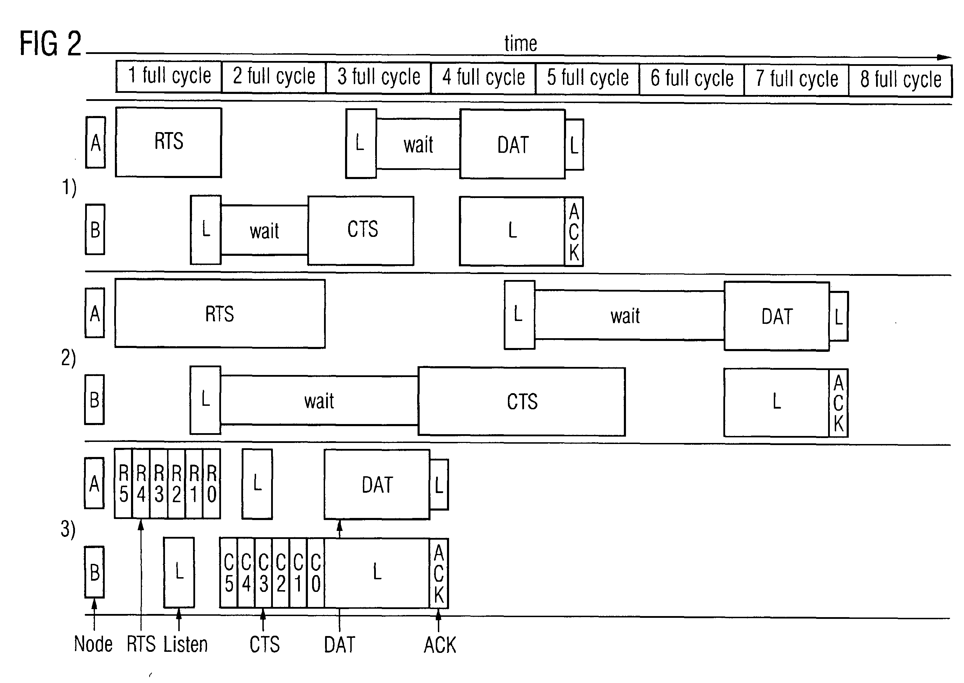

Each RTS and CTS contains a field in the header big enough to cope with twice the number of sectors. It is used to announce the number of RTS/CTS transmissions left. When a node receives the RTS/CTS with transmission countdown, it knows when the transmission will stop. Hence each receiving node can calculate the NAV for the announced transmission in proper manner. In addition the answering node knows when to start its own reply message. This saves a lot of time as well as it prevents other nodes from sending as there is no guard time between reception and answer required. Fig. 2 points out the mechanism in detail. For better illustration nodes with three sectors are shown. The time required for sending a complete cycle is shown on top. The number of the CCRx cycles is shown on top as time scale. Each cycle is big enough to allow sending and reception of six RTS or CTS.

In the first scenario a normal RTS is sent by node A. Node B catches one of the last two RTS sent. As it does not know if it got the very last or the first one, it must perform a wait cycle. If B would answer immediately, its CTS might interfere with the original RTS at other nodes in range. After sending the RTS, A waits too. Then it listens sector by sector and catches the CTS in the middle of the transmission. As it does not know about this fact, A will wait another wait time until it sends the DAT packet. This is acknowledged by B right away. A single wait time is time to perform one cycle CCRx. In each wait time other nodes could monitor the channel and conclude falsely that the channel is free. Simply increasing the time RTS/CTS as shown in the second row, or using a busy tone in the mean time does not solve the problem, because wait times are required to increase in the same manner.

The proposed solution is shown below. Each packet carries a countdown timer to announce how many times the packet will be sent again after finishing the current packet. It is decreased each time a RTS or CTS is sent. Now every node receiving the RTS or CTS packet knows about the timing of the sender. There is no need to insert wait times. Hence the channel can not accidentally be sensed free.

For a node with eight sectors only four bits are required additionally to prevent additional wait times and false channel sensing too. The countdown timer will be added into the packet header.

RTS/CTS countdown timer can be also used to make better assumptions about the channel state in general.

The cCRefresh function is used to update each sectors state of a node in its sector status table (SST). This is of importance as SST is required to be as up-to-date as possible to make good decisions when channel state information is required. E. g. when a packet must be sent, the node looks up all the sectors that are demanded to be free by sendingPolicy chosen for the network. The node will scan the control channel sector by sector (SbS) and updates the sector state information in SST. Primary key of SST is sector number (sectorNo). Further attributes for sectorNo are status, time until the state is valid (validTo), that is the NAV, the address of the node discovered (Addr), RTS/CTS countdown timer (countdown) and a timestamp indicating when the stored node address has been monitored. While the node performs cCRefresh, it will only listen sector by sector and updates SST, but it will not perform any other action. An up-to-date SST is essential in particular when fast RTS sent shall be used.

When an RTS or CTS packet not intended for the receiving node is received, the sector state is set blocked for the time announced in the RTS/CTS. When a collision is detected or assumed the sector state is set to "free", this state is valid until it is replaced by a new state. If the old state is regular NAV for packet transmission, the sector state is not updated to "free".

CCRefresh will be executed each time SST is assumed to be too old. This is the case when the node is powered on, when data transmission has been finished successful or not and as well after backoff is performed. Backoff time is reduced by time of cCRefresh, so there is no additional time wasted for updating SST.

The function counts the number of sectors scanned by CCRx and leaves cCRefresh state when performing a full cycle CCRx. It also enables retryToSend when requested.

This mechanism is intended to update the SST of a node with the information gathered by listen in CC. This idea is quite similar to the network allocation vector (NAV) in IEEE802.11.

SST carries the state for each sector which can be "free" (FRE) if there is no transmission found, "single foreign access" (SFA) if a single packet with other nodes destiny address is found, "multiple foreign access" (MFA) in case a collision is assumed and "single own access" (SOA) when a packet is detected for the receiving node itself. A sector is counted as "blocked", if MFA is assumed or if SFA is received. A sector state will be updated to FRE, if no packet was expected, nothing else is received and no NAV lasting longer is already stored. The corresponding sector of receipt is set SOA, when an expected packet, RTS or CTS, dedicated to the node is received.

BlockingTime depends on the blocking reason. For MFA it is time of one full cycle CCRx. In case of SFA the announced transmission time is used to calculate the NAV. The current time will be used for state FRE.

It is possible that a node's transmission might be received not only at the best sector, but also at a sector left or right to it. It depends on node alignment and distances between the nodes which case happens. The effect is influenced by the radiation pattern of the transmitter and reception pattern of the receiver as well. Hence the interesting question is which sector shall be "blocked"? There are four different static strategies possible: block the current sector only (c), block the current sector and its predecessor (c-1), block the current sector plus the successor (c+1) or block the current sector, its predecessor and successor (c+/-1). This issue will be called blockingPolicy. The more sectors are blocked the lower the chance to send is. A sector blocked erroneously leads to unnecessary delay while a sector erroneously declared free may lead to collisions.

The current sector is a sector used in the current transmission, i.e. the sector receiving the data (e.g. packet or signal) of the current transmission.

When full topology knowledge is available, each node knows the best sector to its neighbours. But it does not know if and which surrounding sector will be affected by foreign transmission besides the best sector. On the other hand, this information can be collected on runtime and stored in SST. For this another two bits, a predecessor and a successor bit will be stored in TIT. When a packet is received from a node and these bits are set true, the node in question has the capability to disturb transmission in the predecessor and successor sectors of its best sector, too.

It is obvious that the current sector information shall be updated when it is scanned. But when should be other sectors than the current one updated? To keep things easy a static strategy could be followed all the time. The discussion is as follows.

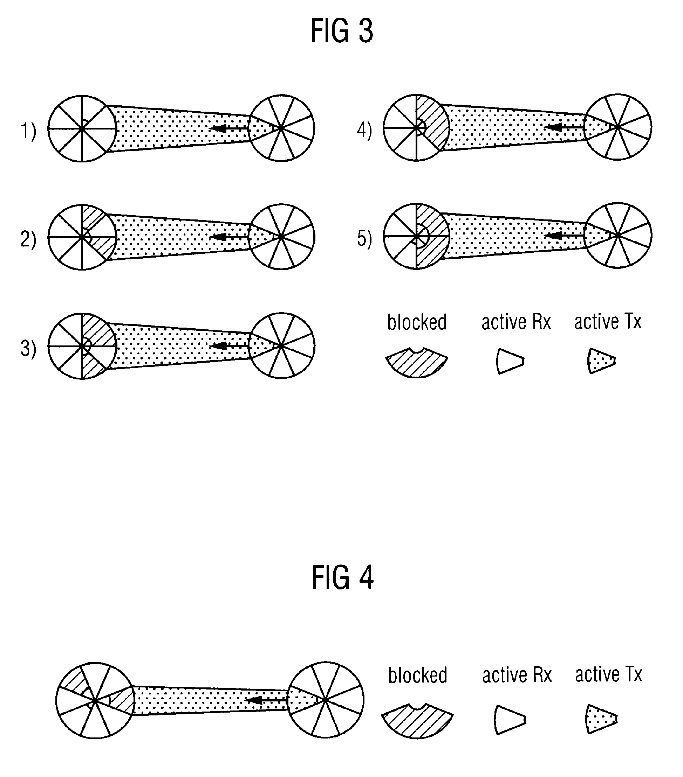

When the most restrictive blockingPolicy c+/-1 is used, overblocking may occur. The strategy could lead to massive blocking although it is not required. For illustration see Fig. 3. The first sector is scanned free at the beginning (1). Then a foreign access is detected and leads to blocking of three sectors (2). The first sector is blocked without having the problem there. During the next sector scan the same blocking happens again (3). Now, half the node is blocked. One quarter is blocked erroneously. In (4) the sector is scanned free, but it is not set "free" due to the present NAV is lasting longer. In result 50% of the node is blocked, 25% is blocked falsely (5). The situation relaxes a bit, if the signal is received from a single sector only. However, the predecessor sector blocked first remains in false state too. If more than one other node is detected or the signal is received on three sectors even more will be blocked. Half of an eight sectored node will be blocked with ease by this restrictive blockingPolicy.

Blocking the predecessor is not a good choice in particular, if a predecessor sector state is set falsely, it will remain for almost the time of one full cycle CCRx until it can be corrected. On the other hand, wrong successor blocking is an easy topic as it will be corrected soon, when the next sector in order is scanned. But blocking the successor with long lasting NAV may dominate a MFA and FRE, as well as setting the successor state to MFA will dominate FRE. SOA is able to update FRE and MFA whereas SFA and successor blocking may prevent a sector being set free again. In this case +1-strategies become more restrictive than valuable. States set wrongly will lead to wrong decisions.

Moreover, blockingPolicies unequal c are only of use when applied to the bestSector. When bestSector is known, the policy will be used only in accordance with this knowledge. The other way round restrictive policies lead to ongoing false decision. In case of collision assumption (MFA) the bestSector can not be determined and thus an advanced blockingPolicy can not be chosen.

However, the RTS/CTS countdown mechanism offers further options for a better blockingPolicy. With countdown information a node knows if it had missed RTS/CTS of if it can expect another copy of these RTS/CTS in the next sector. But the countdown can be exploited only if a single packet has been detected in sector surrounding to the current sector.

Each time a single packet has been detected, its best sector is looked up in TIT. If the sector of detection is not the best sector, the node determines if the packet has been received on the predecessor or successor of the best sector and sets the predecessor and the respectively the successor bit in TIT true.

When MFA or FRE is found, the node determines if there have been single packets detected in the surrounding sectors. If the predecessor's countdown indicates the packet will be sent at least once again, its NAV is read out of SST. If the successor's countdown claims the packet has been sent recently on the current sector too, its NAV is read out also. Now the SST information of the surrounding sector whose NAV lasting longest will be stored for current sector containing FRE or MAF.

The current sector status containing only vague information about its real state has been updated with detailed information. In case there is no predecessor or successor with the desired state and TIT entry available, MFA or FRE is stored for current sector. While being in cCRefresh, the node is forbidden to reply to packets intended to it. RTS is the only packet that is expected here. As the node does not reply, the announced NAV will never come into account, but multiple RTS may still use the channel for one cycle. The sector is set SOA in this case. When a packet not intended to the node is received, SFA will follow. Dynamic blockingPolicy is used in any case.

With this exploit of anyway transmitted information the number of wrongly set sector states can be reduced. If, for example, CTS is expected, but not received then looking to the surrounding sectors may confirm the collision assumption. If so, a collision appeared at the CTS-expecting node for real. As the reason is known, the MFA sector can be updated with SFA, SOA. The effect is even more worth when applied to the case a node expects RTS, receives nothing and claims the sector to be free. If it finds out now that in at least one of its surrounding sectors a node announced, it will continue sending and this transmission has the ability to disturb the current sector, then the current sector is not free, but a collision took place in reality. The exploit of the RTS/CTS countdown mechanism prevents a node to transmit in an already used channel. The method is a case of collision detection in wireless channels.

Besides all the positive aspects of the proposed mechanism, some limitations must be pointed out also. The very first item is that the best sector really must be the best sector. Otherwise blocking of wrong sectors might happen. Second the necessary information is gathered while the network is running. Hence it will take some time to set the predecessor and successor bit in TIT for each node in range before the effect is exploited. The required TIT bits may not be set for a long time in case of ongoing multiple channel access, e. g. in high load scenarios. Multiple antecessors or successors are not considered. In case a node is able to receive the same signal from all its sectors, e. g. caused by reflections if the node is placed deep in a corner, these reflections are not considered here. The method may lead to overblocking in case a surrounding sector is claiming to send in current sector too, but it is easily overwhelmed by communication of close nodes in current sector. Furthermore, the successor's state is the oldest one present in SST, so it could be possible new real state is already present, but not known yet. A last limitation named here is the lack of mobility support for the currently used algorithm. For this a heuristically approach may help to find the best sector. It will be discussed in similar manner to bestSector detection in NMAC part.

PolicyCheck is a function called when a RTS or CTS shall be sent. It returns a Boolean value to allow sending or not.

It has to be noted that a nodes transmission might be received not only at the best sector, but also at a sector left or right to it. Thus maybe more than the bestSector must be free for permission to send. This will be called sendingPolicy. Four options for static sendingPolicies will be discussed in brief.

First choice is that only the current sector (c) must be free. This is the absolute minimum requirement for sending data. However, c-1, c+1 or c+/-1 could also be a reasonable policy to prevent a node disturbing other transmissions.

The most restrictive sendingPolicy is c+/-1. It assures that the transmission will start only in case the neighbour sectors are free to send too. However, if there are many sectors blocked, sending will be forbidden often. This can be illustrated with picture (5) in Fig. 3. There are only three positions allowed to send, while five positions are forbidden to send due to foreign use. If the blocked sectors do not form a single block, but spread as shown in Fig. 4, the situation worsens. The number of positions allowed to send is reduced to two in case only two sectors are blocked. Hence, the most restrictive sendingPolicy will prevent sending very often and may lead to massive packet dropping in queue. The situation relaxes if c-1, c+1 or c is used as sendingPolicy.

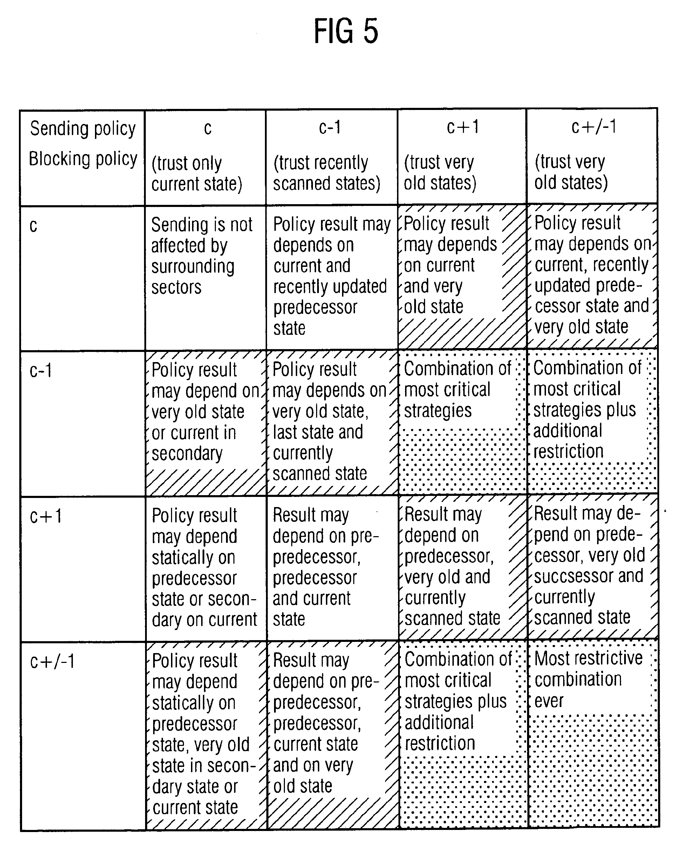

While a policy including "-1" is the most restrictive blockingPolicy the equivalent part for sendingPolicy is "+1", because the successor sector is the one whose state has been updated almost one cycle CCRx ago. The stored information is the oldest in whole SST. Hence, the question is if this old state was correct and if it is still correct now. When putting a restrictive blockingPolicy together with a restrictive sendingPolicy, there might be only a few collisions, but it is obvious that the channel is hardly allocated. Further interdependencies between static blockingPolicy and static sendingPolicy are shown in Fig. 5. The darker the colour in the cell is, the more restrictive the combination is for permission to send. Even if not written outright, also states of sectors scanned many CCRx cycles ago may dominate a decision if a long lasting NAV has been announced.

In previous section no static, but a dynamic knowledge based approach has been selected for updating SST. The mechanism is expected to block only sectors that really require blocking. The states set are assumed to be right after the steady state is reached in terms of predecessor and successor knowledge. Before the steady state is reached, blocking is probable insufficient. The mechanism applies any named blockingPolicy. Thus, the effect of the chosen static sendingPolicy depends on the number of sectors that must be free to send and on the network topology that caused this interference pattern at a node. Nevertheless, it is possible a state set some time ago is already outdated.

If c is chosen for sendingPolicy, sending permission is influenced only by current sector state scanned now and cycles CCRx before. When steady state is reached, permission to send depends also on states of +/-1 sectors scanned now and earlier. This is even correct, when c is used as sendingPolicy. The current sector is able to block surrounding sectors and it can be also influenced by them at a time. Thus, even sendingPolicy c can be restrictive. It is chosen for analysis as most relaxed policy.

In case of transmission errors a node will perform an exponential random back-off based upon back-off in local area networks (IEEE 802.3, IEEE 802.11). But in different the back-off used in the proposed MACs is shortened by time of one cCRefresh, as this function will be executed each time after back-off. CCRefresh becomes the last part of back-off. The term back-off includes receipt in control channel, but no other action.

With regard to transmission sector determination, a node is assumed to be integrated, if it has discovered at least one neighbour.

It is fully integrated, if it knows the bestSectors of all single hop neighbour nodes.

Node discovery by (when done in CC, wait for free, as counterpart must be able to receive. And it will not do so, if channel is already in use!).
- beacon = "Hello, I am out there, this is my address"
- Whisper = "Pst, hey you node X, I know the following nodes: XYZ"
- Teaser = "Node X, are you out there?"
- Prevent TIT from getting old:

Thus, the present invention refers to a method for carrier sense in a communications system and to corresponding receiving and sending nodes of the communications system. The methodology according to the present invention comprises transmitting data several times from a transmitting node to a receiving node and indicating for the transmitting, how often (count down) the data will be transmitted again. This count down mechanism is used for estimating the real channel condition of a sector of a receiving node.

It is noted that the present invention is not restricted to the above embodiments. As already pointed out above, the present invention can be applied in connection with any handshaking methodology. Further, as already pointed out, although the present invention is described rather by use of method steps, the involved nodes (receiving nodes and transmitted nodes) comprise the necessary arrangements, configurations and/or means to perform the corresponding steps, even if not described in more detail above for sake of conciseness. The embodiments may thus vary within the scope of the attached claims.

## Claims

1. A method for carrier sense in a communications system comprising:
transmitting data several times from a transmitting node to a receiving node; and
indicating for the transmitting, how often the data will be transmitted again.

2. The method according to claim 1, wherein a maximal number of the transmitting of the data depends on at least one of:
- a number of sectors of antennas of the receiving node;
- a number of sectors of antennas of the transmitting node;
- on whether the transmitting node and the receiving node are synchronised.

3. The method according to claim 2, wherein:
if the transmitting node and the receiving node are synchronised, the maximal number of the transmitting is the number of sectors of antennas of the receiving node;
- else the maximal number of the transmitting is double of the number of sectors of antennas of the receiving node.

4. The method according to any one of the preceeding claims comprising storing antennawise for each sector of the receiving node, which other station can be received by the respective sector of the antenna.

5. The method according to claim 4 comprising storing antennawise for each sector of the receiving node a status of a current sector.

6. The method according to claim 5, wherein the status of the current sector comprises an ID of a node using the current sector for transmission of the data to the receiving node or indicates said sector as unused.

7. The method according to claim 5 or 6, wherein,
if data of a first node is receivable in a first sector of the receiving node and in the current sector being a neighbour sector of the first sector;
if data of the first node is transmitted to the first sector;
if a channel of the current sector is unused or has collisions within a current transmission period; and
if a second node transmits data to the current sector; the method comprises:
detecting, whether the data transmitted by the first node will be transmitted again; and
storing a status information of the first sector into the current sector if the data transmitted by the first node will be transmitted again.

8. The method according to claim 5 or 6 comprising:
detecting a first packet in a first sector being one of surrounding sectors of the current sector;
Detecting a second packet in a second sector being a further surrounding sector of the current sector; and
if the first packet will be sent at least once again, and if the second packet will be sent at least once again, and if the first packet and the second packet are receivable in the current sector:
storing a status information of the first sector into the current sector if network allocation of the first sector lasts longer than network allocation of the second sector; or
storing a status information of the second sector into the current sector if the network allocation of the second sector lasts longer than the network allocation of the first sector.

9. A transmitting node of a communications system, the transmitting node being configured to:
transmit data several times to a receiving node; and
indicate for the transmitting, how often the data will be transmitted again.

10. The transmitting node according to claim 9, wherein a maximal number of the transmitting of the data depends on at least one of:
- a number of sectors of antennas of the receiving node; and
- a number of sectors of antennas of the transmitting node;
- on whether the transmitting node and the receiving node are synchronised.

11. The transmitting node according to claim 9 or 10, wherein:
if the transmitting node and the receiving node are synchronised, the maximal number of the transmitting is the number of sectors of antennas of the receiving node; and
the maximal number of the transmitting is double of the number of sectors of antennas of the receiving node otherwise.

12. A receiving node of a communications system, the receiving node comprising a plurality of antennas arranged in a circular arrangement, wherein an antenna is arranged to receive data in a sector of the antenna, and wherein the receiving node is arranged to:
receive data several times from a transmitting node; and
indicate for the transmitting, how often the data will be transmitted again.

13. The receiving node according to claim 12, the receiving node being arranged to store antennawise for each sector, which station can be received by the respective sector of the antenna.

14. The receiving node according to claim 13, the receiving node being arranged to store antennawise for each sector a status of a current sector.

15. The receiving node according to claim 14, wherein the status of the current sector comprises an ID of node using the current sector for transmission of the data to the receiving node or indicates said sector as unused.

16. The receiving node according to claim 14 or 15, wherein,
if data of a first node is receivable on a first sector of the receiving node and in the current sector being a neighbour sector of the first sector; and
if data of the first node is transmitted to the first sector; and
if a channel of the current sector is unused or has collisions within a current transmission period; and
if a second node transmits data to the current sector; the receiving node is configured to:
detect whether the data transmitted by the first node will be transmitted again; and
store a status information of the first sector into the current sector if the data transmitted by the first node will be transmitted again.

17. The receiving node according to claim 14 or 15, wherein the receiving node is configured to:
detect a first packet in a first sector being one of surrounding sectors of the current node; and
detect a second packet in a second sector being a further surrounding sector of the current node; and
if the first packet will be sent at least once again, and if the second packet will be sent at least once again, and if the first packet and the second packet are receivable in the current sector, the receiving node is configured to:
store a status information of the first sector into the current sector if network allocation of the first sector lasts longer than network allocation of the second sector; or
store a status information of the second sector into the current sector if the network allocation of the second sector lasts longer than the network allocation of the first sector.
